# EUROPEAN PATENT APPLICATION

(11) **EP 1 517 162 A1**
(43) Date of publication of application: **23.03.2005**
(21) Application number: 03733444.8
(22) Date of filing: 16.06.2003
(51) Int. Cl.: G02B 5/30

(54) **OPTICAL LAMINATE, POLARIZATION LIGHT SOURCE DEVICE AND LIQUID CRYSTAL DISPLAY UNIT**

(30) Priority: 17.06.2002 JP 2002175813
(71) Applicant: Zeon Corporation, Tokyo 100-8323 (JP)
(72) Inventor: MURAKAMI, Toshihide, c/o ZEON CORPORATION, Tokyo 100-8323 (JP); SATO, Takashi, c/o ZEON CORPORATION, Tokyo 100-8323 (JP); ARAKAWA, Kohei, c/o ZEON CORPORATION, Tokyo 100-8323 (JP)
(74) Representative: VOSSIUS & PARTNER
(86) International application number: PCT/JP2003/007618
(87) International publication number: WO 2003/107048

(57) **Abstract**

An optical laminate comprising a cholesteric liquid crystal layer and a 1/4 wavelength plate laminated one upon another, **characterized in that** the 1/4 wavelength plate comprises at least one layer (layer A) consisting of a material having a positive intrinsic birefringence least one layer (layer B) consisting of a material having a negative intrinsic double refraction value, the orientations of molecular chains in the layer A and the layer B are equal to each other, and a variation in thickness of the 1/4 wavelength plate is below 5%; a polarization light source device provided with this optical laminate; and a liquid crystal display unit provided with this polarization light source device. The optical laminate which delivers an excellent brightness improving effect, is free from a variation in in-plane brightness, and ensures a long-term, stable brightness improving effect; and the polarized light source device and the liquid crystal display unit provided with this optical laminate are provided.

## Description

### TECHNICAL FIELD

The present invention relates to an optical laminate including a cholesteric liquid crystal layer and a quarter-wave plate laminated on the cholesteric liquid crystal layer, a liquid crystal display polarized light source device including the optical laminate, and a liquid crystal display device including the polarized light source device.

### BACKGROUND ART

A liquid crystal display (LCD) has excellent features such as high resolution, low profile, light weight, and low power consumption, and is widely used as a flat panel display for a TV, a personal computer, or the like. However, there has been a problem in which a transmission-type color liquid crystal display used for a notebook-type personal computer or the like does not necessarily have high utilization efficiency of light energy. In the color liquid crystal display, utilization efficiency of light energy emitted from a backlight is low since a polarizer, a color filter, and the like have low light transmittance. Therefore, it is an important technical problem to improve utilization efficiency of light energy emitted from the backlight by improving the light transmittance of the LCD panel.

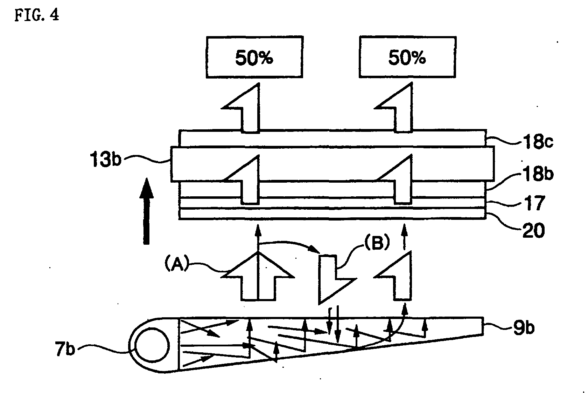

In order to solve such a problem, an optical laminate which can increase luminance by combining a cholesteric liquid crystal layer and a quarter-wave plate has been proposed (see Nitto Denko Technical Report, Vol. 39, No. 1, May 2001, for example). As shown in FIG. 4, an optical laminate consisting of a cholesteric liquid crystal layer 20 and a quarter-wave plate 17 and a polarizing film 18b are interposed between a light guide plate 9b including a reflective plate (not shown) and a liquid crystal cell 13b in that order, whereby light (natural light) emitted from a backlight 7b is separated into transmitted circularly polarized light and reflected circularly polarized light by the cholesteric liquid crystal layer 20. The transmitted circularly polarized light (A) is converted into linearly polarized light by the quarter-wave plate 17 and the polarizing film 18b and passes through the liquid crystal cell 13b. The reflected circularly polarized light (B) is changed in phase by the reflective plate and becomes circularly polarized light which is transmitted through the cholesteric liquid crystal layer 20. In theory, the light emitted from the backlight 7b can be almost entirely transmitted to the liquid crystal cell 13b. The quarter-wave plate used in this method must be a broadband quarter-wave plate having a quarter-wave retardation over the entire visible wavelength region. If a wave plate having different retardations depending on the wavelength is used, whiteness of light is impaired when using the wave plate for a light source.

As the broadband quarter-wave plate, a quarter-wave plate formed by laminating a half-wave plate and a quarter-wave plate, each of which is made of a single-layer resin stretched film, so that the slow axes intersect at a specific angle, and a quarter-wave plate obtained by stretching a specific cellulose ester film have been known.

However, since the former is obtained by cutting each stretched film into small quadrilateral pieces at an angle with the lateral or longitudinal direction of the film and laminating the resulting small pieces, the cholesteric liquid crystal layer is also subjected to batch processing in small piece units, thereby resulting in poor production efficiency. Since the latter is obtained as a long film, the cholesteric liquid crystal layer can be continuously laminated, whereby the production efficiency can be increased. However, since the cellulose ester film is easily affected by humidity, stability of optical properties deteriorates if the quarter-wave plate absorbs moisture.

As another example, a quarter-wave plate obtained by uniaxially stretching a laminate obtained by coextruding a norbomene resin and an ester resin has been known. This quarter-wave plate has excellent broadband properties and excellent stability of optical properties, and can be manufactured as a long film.

However, minute wrinkles (unevenness) may occur on the surface or a variation in thickness may occur when stretching the laminate, whereby retardation uniformity may be impaired. Therefore, an optical laminate obtained by laminating such a quarter-wave plate and a cholesteric liquid crystal layer produces an in-plane variation in luminance or chromaticity of transmitted light.

The present invention has been achieved in view of the above-described problems of the conventional art, and has an objective of providing an optical laminate in which a cholesteric liquid crystal layer and a quarter-wave plate including at least one layer of each of materials having positive and negative intrinsic birefringence values are laminated and which exhibits an excellent luminance improving effect, does not show an in-plane variation in luminance, and stably maintains the luminance improving effect for a long period of time, and a polarized light source device and a liquid crystal display device including the optical laminate.

### DISCLOSURE OF THE INVENTION

The present inventors have conducted extensive studies on an optical laminate including a cholesteric liquid crystal layer and a quarter-wave plate laminated on the cholesteric liquid crystal layer. As a result, the present inventors have found that an optical laminate which stably exhibits an excellent luminance improving effect for a long period of time can be obtained by using, as the quarter-wave plate laminated on the cholesteric liquid crystal layer, a quarter-wave plate including at least one layer of a material having a positive intrinsic birefringence value (layer A) and at least one layer of a material having a negative intrinsic birefringence value (layer B), the layer A and the layer B having the same molecular chain orientation and the quarter-wave plate having a variation in thickness of specific value or less. This finding has led to the completion of the present invention.

According to a first aspect of the present invention, there is provided an optical laminate, comprising a cholesteric liquid crystal layer and a quarter-wave plate laminated on the cholesteric liquid crystal layer, wherein the quarter-wave plate includes at least one layer of a material having a positive intrinsic birefringence value (layer A) and at least one layer of a material having a negative intrinsic birefringence value (layer B), the layer A and the layer B having the same molecular chain orientation, and the quarter-wave plate having a variation in thickness of 5% or less.

In the optical laminate of the present invention, the quarter-wave plate is preferably a quarter-wave plate obtained by stretching a laminate obtained by coextruding the material having a positive intrinsic birefringence value and the material having a negative intrinsic birefringence value.

In the optical laminate of the present invention, the material having a positive intrinsic birefringence value is preferably an alicyclic structure-containing polymer resin having a content of a resin component with a molecular weight of 2,000 or less of 5 wt% or less. The material having a negative intrinsic birefringence value is preferably a vinyl aromatic polymer.

In the optical laminate of the present invention, the quarter-wave plate preferably has a configuration consisting of the layer A, the layer B, and the layer A, or consisting the layer B, the layer A, and the layer B.

According to a second aspect of the present invention, there is provided a polarized light source device, comprising the optical laminate of the present invention.

It is preferable that the polarized light source device of the present invention comprise a light reflecting layer, a light source, and the optical laminate of the present invention, and that the light reflecting layer, the light source, and the optical laminate be disposed so that light emitted from the light source is incident on the optical laminate from the side of the cholesteric liquid crystal layer, and reflected circularly polarized light reflected by the optical laminate is reflected by the light reflecting layer and is incident on the optical laminate.

According to a third aspect of the present invention, there is provided a liquid crystal display device, comprising the polarized light source device of the present invention.

### BRIEF DESCRIPTION OF THE DRAWINGS

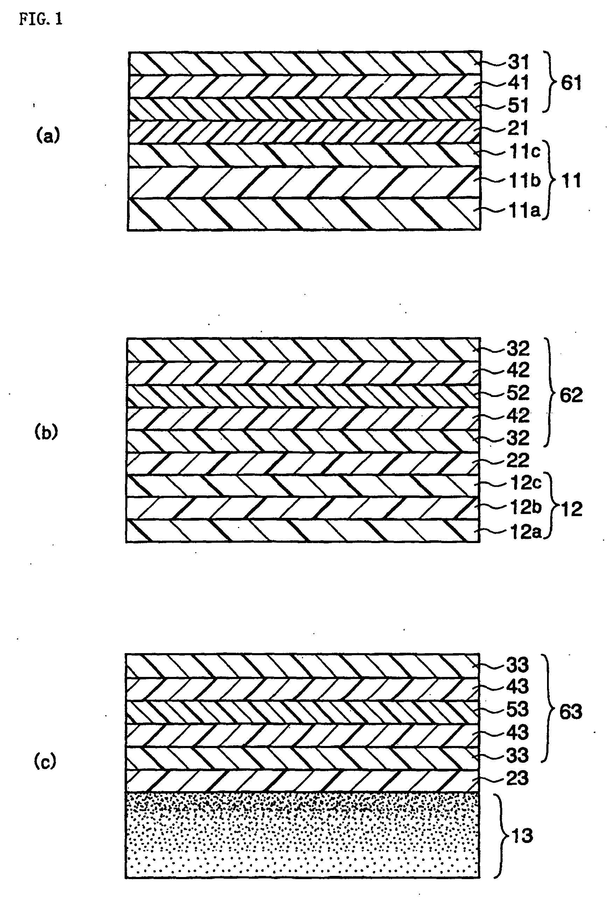

FIG. 1 is a layer-configuration cross-sectional view of an optical laminate of the present invention. FIG. 1(a) is a layer-configuration cross-sectional view of a type in which a laminate including three layers of three different types and a cholesteric liquid crystal layer are laminated, FIG. 1(b) is a layer-configuration cross-sectional view of a type in which a laminate including five layers of three different types and a cholesteric liquid crystal layer are laminated, and FIG. 1(c) is a layer-configuration cross-sectional view of a type in which a cholesteric liquid crystal layer of which the helical pitch is continuously changed in the thickness direction is laminated in the optical laminate shown in FIG. 1(b).
FIG. 2 is a layer-configuration cross-sectional view of an example of a polarized light source device of the present invention.
FIG. 3 is a layer-configuration cross-sectional view of an example of a liquid crystal display device of the present invention.
FIG. 4 is a diagram illustrative of a cross section of a layer configuration of a conventional polarized light source device using a laminate of a cholesteric liquid crystal layer and a quarter-wave plate as a reflective polarizer, and the state of reflection and transmission of incident light.

### BEST MODE FOR CARRYING OUT THE INVENTION

The optical laminate, the polarized light source device, and the liquid crystal display device of the present invention are described below in detail.

### 1) Optical laminate

The optical laminate of the present invention includes a cholesteric liquid crystal layer and a quarter-wave plate laminated on the cholesteric liquid crystal layer.

### (1) Quarter-wave plate

The quarter-wave plate used in the present invention includes at least one layer of a material having a positive intrinsic birefringence value (layer A) and at least one layer of a material having a negative intrinsic birefringence value (layer B), the layer A and the layer B having the same molecular chain orientation.

The material having a positive intrinsic birefringence value which makes up the layer A refers to a material having properties showing a positive optical uniaxiality when the molecules are oriented with an uniaxial order. As examples of the material having a positive intrinsic birefringence value, a rod-like liquid crystal, a rod-like liquid crystal polymer, an alicyclic structure-containing polymer resin, an olefin polymer, polyester polymer, a polyarylene sulfide polymer, a polyvinyl alcohol polymer, a polycarbonate polymer, a polyallylate polymer, a cellulose ester polymer, a polyethersulfone polymer, a polysulfone polymer, a polyallylsulfone polymer, a polyvinyl chloride polymer, a (binary or ternary, for example) copolymer of these polymers, and the like can be given. These materials may be used either individually or in combination of two or more.

In the present invention, the alicyclic structure-containing polymer resin or the olefin polymer is preferable, with the alicyclic structure-containing polymer resin being still more preferable from the viewpoint of light transmittance, heat resistance, dimensional stability, photoelasticity, and the like.

The alicyclic structure-containing polymer resin includes an alicyclic structure in the repeating unit of the polymer resin. A polymer resin including an alicyclic structure in the main chain or a polymer resin including an alicyclic structure in the side chain may be used. As examples of the alicyclic structure, a cycloalkane structure, a cycloalkene structure, and the like can be given. Of these, the cycloalkane structure is preferable from the viewpoint of thermal stability and the like. The number of carbon atoms which make up the alicyclic structure is not particularly limited. The number of carbon atoms is usually 4 to 30, preferably 5 to 20, and still more preferably 6 to 15.

The content of the repeating unit including the alicyclic structure in the polymer resin including the alicyclic structure may be arbitrarily selected depending on the use. The content is usually 50 wt% or more, preferably 70 wt% or more, and still more preferably 90 wt% or more. If the content of the repeating unit including the alicyclic structure is too low, heat resistance of the optical laminate may be decreased.

There are no specific limitations to the alicyclic structure-containing polymer resin. For example, a norbornene polymer, a monocyclic olefin polymer, a cyclic conjugated diene polymer, a vinyl alicyclic hydrocarbon polymer, hydrogenated products of these polymers, and the like can be given. Of these, the hydrogenated product of the norbornene polymer, the vinyl alicyclic hydrocarbon polymer, and the hydrogenated product of the vinyl alicyclic hydrocarbon polymer are preferable because of excellent heat resistance and mechanical strength.

As examples of the norbornene polymer, a ring-opening polymer of norbomene monomers, a ring-opening polymer of a norbomene monomer and a monomer copolymerizable with the norbomene monomer, an addition polymer of norbornene monomers, an addition polymer of a norbornene monomer and a monomer copolymerizable with the norbomene monomer, hydrogenated products of these polymers, and the like can be given. Of these, the hydrogenated product of the ring-opening polymer of norbornene monomers is particularly suitably used because of excellent heat resistance and mechanical strength.

As examples of the norbornene monomer, bicyclo[2.2.1]hepta-2-ene (common name: norbornene), tricyclo[4.3.0.1^{2,5}]deca-3,8-diene (common name: dicyclopentadiene), 7,8-benzotricyclo[4.3.0.1^{2,5}]deca-3-ene (common name: methanotetrahydrofluorene), tetracyclo[4.4.0.1^{2,5}.1^{7,10}]dodeca-3-ene (common name: tetracyclododecene), derivatives (including a substituent on the ring) of these compounds, and the like can be given. As examples of the substituent, an alkyl group, an alkylene group, an alkoxycarbonyl group, a carboxyl group, and the like can be given. A plurality of substituents, which may be the same or different, may be bonded to the ring. The norbomene monomers may be used either individually or in combination of two or more.

As examples of the monomer copolymerizable with the norbomene monomer, monocyclic olefins such as cyclohexene, cycloheptene, and cyclooctene, and derivatives thereof; cyclic conjugated dienes such as cyclohexadiene and cycloheptadiene, and derivatives thereof; and the like can be given.

The ring-opening polymer of the norbomene monomers and the ring-opening copolymer of the norbomene monomer and the monomer copolymerizable with the norbomene monomer may be obtained by (co)polymerizing the monomers in the presence of a ring-opening polymerization catalyst.

As examples of the ring-opening polymerization catalyst, a catalyst including a halide of a metal such as ruthenium or osmium, a sulfate or an acetylacetone compound, and a reducing agent; a catalyst including a halide of a metal such as titanium, zirconium, tungsten, or molybdenum, or an acetylacetone compound, and an organoaluminum compound; and the like can be given.

The addition polymer of the norbornene monomers and the addition copolymer of the norbomene monomer and the monomer copolymerizable with the norbomene monomer may be obtained by polymerizing the monomers in the presence of an addition polymerization catalyst.

As the addition polymerization catalyst, a catalyst including a compound of a metal such as titanium, zirconium, or vanadium and an organoaluminum compound, and the like may be used.

As examples of the monomer addition-copolymerizable with the norbomene monomer, α-olefins having 2 to 20 carbon atoms such as ethylene, propylene, 1-butene, 1-pentene, 1-octene, 1-decene, 1-dodecene, 1-tetradecene, 1-hexadecene, 1-octadecene, and 1-eicosene, and derivatives thereof; cycloolefins such as cyclobutene, cyclopentene, cyclohexene, cyclooctene, 3a,5,6,7a-tetrahydro-4,7-methano-1H-indene, and derivatives thereof; nonconjugated dienes such as 1,4-hexadiene, 4-methyl-1,4-hexadiene, 5-methyl-1,4-hexadiene, and 1,7-octadiene; and the like can be given. These monomers may be used either individually or in combination of two or more. Of these monomers, α-olefins are preferable, with ethylene being still more preferable.

As examples of the monocyclic olefin polymer used in the present invention, addition polymers of cyclohexene, cycloheptene, and cyclooctene, and the like can be given.

As examples of the cyclic conjugated diene polymer used in the present invention, 1,2-addition or 1,4-addition polymers of cyclic conjugated diene monomers such as cyclopentadiene and cyclohexadiene, and the like can be given.

The molecular weight of the norbornene polymer, the monocyclic olefin polymer, and the cyclic conjugated diene polymer is arbitrarily selected depending on the use. The molecular weight is usually 5,000 to 500,000, preferably 8,000 to 200,000, and still more preferably 10,000 to 100,000 as a polyisoprene or polystyrene-reduced weight average molecular weight (Mw) measured by' gel permeation chromatography (hereinafter abbreviated as "GPC") using cyclohexane (or toluene when the polymer resin is not dissolved in cyclohexane) as a solvent.

The vinyl alicyclic hydrocarbon polymer used in the present invention is a polymer including a repeating unit derived from a vinylcycloalkene or vinylcycloalkane. As examples of the vinyl alicyclic hydrocarbon polymer, polymers of vinyl alicyclic hydrocarbon compounds such as vinylcycloalkanes including a vinyl group such as vinylcyclohexane and vinylcycloalkenes including a vinyl group such as vinylcyclohexene, and hydrogenated products thereof; aromatic-portion hydrogenated products of polymers of vinyl aromatic hydrocarbon compounds such as styrene and α-methylstyrene; and the like can be given.

The vinyl alicyclic hydrocarbon polymer may be an aromatic-portion hydrogenated product of a random copolymer of a vinyl alicyclic hydrocarbon compound or a vinyl aromatic hydrocarbon compound and a monomer copolymerizable with these monomers, or an aromatic-portion hydrogenated product of a block copolymer of a vinyl alicyclic hydrocarbon compound or a vinyl aromatic hydrocarbon compound and a monomer copolymerizable with these monomers. The type of block copolymer is not particularly limited. As examples of block copolymer, diblock, triblock, or higher multiblock copolymer, gradient block copolymer, and the like can be given.

The molecular weight of the vinyl alicyclic hydrocarbon polymer is arbitrarily selected depending on the use. The molecular weight is usually 10,000 to 300,000, preferably 15,000 to 250,000, and still more preferably 20,000 to 200,000 as a polyisoprene or polystyrene-reduced weight average molecular weight (Mw) measured by GPC using cyclohexane (or toluene when the polymer resin is not dissolved in cyclohexane) as a solvent. In this case, mechanical strength and moldability of the resulting molding are highly balanced.

The hydrogenated product of the ring-opening polymer of the norbornene monomers, the hydrogenated product of the ring-opening polymer of the norbornene monomer and the monomer copolymerizable with the norbomene monomer, the hydrogenated product of the addition polymer of the norbomene monomers, the hydrogenated product of the addition polymer of the norbomene monomer and the monomer copolymerizable with the norbomene monomer, the hydrogenated product of the polymer of the vinyl alicyclic hydrocarbon compounds, the aromatic-portion hydrogenated product of the polymer of the vinyl aromatic hydrocarbon compounds, and the hydrogenated product of the copolymer of the vinyl alicyclic compound or the vinyl aromatic compound and the monomer copolymerizable with these monomers may be obtained by adding a known hydrogenation catalyst including a transition metal such as nickel or palladium to the polymer solution and hydrogenating the carbon-carbon unsaturated bond preferably in an amount of 90% or more.

The glass transition temperature of the alicyclic structure-containing polymer resin suitable for the present invention may be arbitrarily selected depending on the use. The glass transition temperature is preferably 80°C or more, more preferably 100 to 250°C, and still more preferably 120 to 200°C in order to ensure excellent optical properties.

The alicyclic structure-containing polymer resin suitable for the present invention has a content of a resin component with a molecular weight of 2,000 or less (specifically, oligomer component) of 5 wt% or less, preferably 3 wt% or less, and still more preferably 2 wt% or less. If the content of the oligomer component is high, minute unevenness occurs on the surface or a variation in thickness occurs when stretching the resulting resin laminate, whereby surface profile is decreased.

The content of the oligomer component may be decreased by optimizing selection of the polymerization catalyst or hydrogenation catalyst, the polymerization or hydrogenation reaction conditions, the temperature conditions in a step of pelletizing the resin as a molding material, and the like. The content of the oligomer component may be measured by GPC using cyclohexane (or toluene when the polymer resin is not dissolved in cyclohexane), for example.

The material having a negative intrinsic birefringence value which makes up the layer B refers to a material having properties showing a negative optical uniaxiality when the molecules are oriented with an uniaxial order.

As examples of the material having a negative intrinsic birefringence value, a discotic liquid crystal, a discotic liquid crystal polymer, a vinyl aromatic polymer, a polyacrylonitrile polymer, a polymethyl methacrylate polymer, a cellulose ester polymer, (binary or ternary, for example) copolymers of these polymers, and the like can be given. These materials may be used either individually or in combination of two or more.

Of these, at least one type of polymer selected from the vinyl aromatic polymer, the polyacrylonitrile polymer, and the polymethyl methacrylate polymer is preferable. The vinyl aromatic polymer is still more preferable from the viewpoint of high birefringence properties. A copolymer of styrene and/or a styrene derivative and maleic anhydride is particularly preferable from the viewpoint of excellent heat resistance.

As examples of the vinyl aromatic polymer, a polystyrene, a copolymer of styrene and/or a styrene derivative and at least one monomer selected from acrylonitrile, maleic anhydride, methyl methacrylate, and butadiene can be given. As examples of the styrene derivative, 4-methylstyrene, 4-chlorostyrene, 3-methylstyrene, 4-methoxystyrene, 4-tert-butoxystyrene, α-methylstyrene, and the like can be given.

The glass transition temperature of the vinyl aromatic polymer used in the present invention is preferably 110°C or more, and still more preferably 120°C or more in order to ensure excellent optical properties.

The laminate used in the present invention preferably further includes a layer C between the layer A and the layer B. It is still more preferable that the laminate have a three-layer configuration consisting of the layer A, the layer C, and the layer B, or a five-layer configuration consisting of the layer A, the layer C, the layer B, the layer C, and the layer A, or consisting of the layer B, the layer C, the layer A, the layer C, and the layer B, with the five-layer configuration consisting of the layer A, the layer C, the layer B, the layer C, and the layer A being particularly preferable.

The layer C may be formed of a material having an affinity with the resin having a positive intrinsic birefringence value and the resin having a negative intrinsic birefringence value. In particular, an ethylene-(meth)acrylate copolymer having a melt flow rate (MFR) measured at a temperature of 190°C and a load of 21.18 N of 1 g/10 min or less is preferable. "(Meth)acrylate" used herein indicates an acrylate or a methacrylate.

As examples of the ethylene-(meth)acrylate copolymer having a melt flow rate (MFR) measured at a temperature of 190°C and a load of 21.18 N of 1 g/10 min or less, an ethylene-methyl acrylate copolymer, an ethylene-ethyl acrylate copolymer, an ethylene-propyl acrylate copolymer, an ethylene-butyl acrylate copolymer, an ethylene-methyl methacrylate copolymer, an ethylene-ethyl methacrylate copolymer, an ethylene-propyl methacrylate copolymer, an ethylene-butyl methacrylate copolymer, and the like can be given.

As the ethylene-(meth)acrylate copolymer, a ternary or higher copolymer obtained by copolymerizing other copolymerizable monomers with ethylene and (meth)acrylate may also be used.

As examples of other copolymerizable monomers, α-olefins such as propylene and 1-butene; monomers including a carboxyl group such as maleic acid, fumaric acid, and itaconic acid; carboxylic anhydrides such as maleic anhydride and itaconic anhydride; vinyl monomers such as vinyl acetate; and the like can be given.

If the melt flow rate of the ethylene-(meth)acrylate copolymer measured at a temperature of 190°C and a load of 21.18 N exceeds 1 g/10 min, surface smoothness becomes poor due to occurrence of wrinkles on the surface of the optical laminate, whereby a desired luminance improving effect may not be obtained when laminating the cholesteric liquid crystal layer and the quarter-wave plate. The melt flow rate at a temperature of 190°C and a load of 21.18 N may be measured according to JIS K 7210.

In the ethylene-(meth)acrylate copolymer, the content of the (meth)acrylate structural unit in the copolymer is preferably 5 to 50 wt%, and still more preferably 10 to 30 wt%. If the content of the (meth)acrylate structural unit is less than 5 wt%, adhesive strength between each layer (between the layer A and the layer C or between the layer B and the layer C) may be decreased. If the content of the (meth)acrylate structural unit exceeds 50 wt%, wrinkles may occur due to a decrease in adhesive strength.

In the laminate used in the present invention, the melt viscosity of the alicyclic structure-containing polymer resin measured at a temperature of 250°C and a shear rate of 180 sec⁻¹ is preferably 500 to 4,000 Pa·s, and still more preferably 1,000 to 3,000 Pa·s. The melt viscosity of the vinyl aromatic polymer measured at a temperature of 250°C and a shear rate of 180 sec⁻¹ is preferably 200 to 3,000 Pa·s, and still more preferably 300 to 2,000 Pa·s. If the melt viscosity of the alicyclic structure-containing polymer resin is less than 500 Pa·s or exceeds 4,000 Pa·s, or if the melt viscosity of the vinyl aromatic polymer is less than 200 Pa·s or exceeds 3,000 Pa·s, film formation may become unstable when forming the optical laminate using a coextrusion method.

There are no specific limitations to the manufacturing method for the laminate. For example, (a) a method of separately forming the layer A and the layer B and laminating the layer A and the layer B through an adhesive layer (layer C) by dry lamination to obtain a laminate, (b) a method of forming the layers using a coextrusion method to obtain a laminate, and the like can be given. Of these, the film-forming method (b) using the coextrusion method is preferable since this method enables a laminate having high interlaminar peel strength to be obtained and excels in production efficiency. In the method of obtaining a laminate using the coextrusion method, the material having a positive intrinsic birefringence value and the material having a negative intrinsic birefringence value are extruded from a multilayer die using a plurality of extruders.

In this case, other additives may be added insofar as the objective of the present invention is not impaired. As examples of other additives, a plasticizer, an anti-deterioration agent, and the like can be given. The plasticizer is added in order to improve the mechanical properties or drying speed of the film.

As examples of the plasticizer, a phosphate and a carboxylate can be given. As examples of the phosphate, triphenyl phosphate, tricresyl phosphate, and the like can be given. As examples of the carboxylate, phthalates such as dimethyl phthalate, diethyl phthalate, dibutyl phthalate, dioctyl phthalate, and diphenyl phthalate; citrates such as triethyl O-acetylcitrate and tributyl O-acetylcitrate; butyl oleate; higher fatty acid esters such as methylacetyl ricinoleate and dibutyl sebacate; trimellitates; and the like can be given.

As examples of the anti-deterioration agent, an antioxidant, a peroxide decomposition agent, a radical inhibitor, a metal deactivator, an acid-acceptor, an amine, and the like can be given. The anti-deterioration agent is disclosed in JP-A-3-199201, JP-A-5-1907073, JP-A-5-194789, JP-A-5-271471, JP-A-6-107854, and the like.

These additives are added in an amount of usually 0 to 20 wt%, preferably 0 to 10 wt%, and still more preferably 0 to 5 wt% of the alicyclic structure-containing polymer resin.

The thickness of the laminate obtained in this manner may be appropriately determined according to the use of the resulting laminate. The thickness of the film is preferably 10 to 300 µm, and still more preferably 30 to 200 µm in order to obtain a uniform stretched film by stable stretching.

The quarter-wave plate of the present invention is formed by laminating the layer of the material having a positive intrinsic birefringence value (layer A) and the layer of the material having a negative intrinsic birefringence value (layer B) so that the slow axes intersect at right angles, whereby each layer mutually reduces retardation wavelength dispersion of the other layer to provide almost uniform quarter-wave retardation characteristics for incident light over the entire visible wavelength region.

In order to laminate the layer of the material having a positive intrinsic birefringence value (layer A) and the layer of the material having a negative intrinsic birefringence value (layer B) so that the slow axes intersect at right angles, each layer is caused to have the same molecular chain orientation. Since the quarter-wave plate of the present invention is a laminate of the layers of the materials having intrinsic birefringence values of opposite signs (layer A and layer B), the slow axes of the two layers inevitably intersect at right angles by causing the stretching directions of the layer A and the layer B to coincide.

Such a quarter-wave plate may be manufactured by stretching the above-described laminate. There are no specific limitations to the method for stretching the laminate. A conventional method may be used. As the stretching method, a method of uniaxially stretching the laminate in the vertical direction by utilizing the difference in roll rotational speed, a method of uniaxially stretching the laminate in the lateral direction using a tenter, and the like can be given. Of these, uniaxial stretching in the vertical direction is preferable. There are no specific limitations to the stretching ratio of uniaxial stretching. The stretching ratio is preferably 1.1 to 3, and still more preferably 1.2 to 2.2.

When the glass transition temperatures of the resins which make up the layer A and the layer B are indicated by Tg, the temperature when stretching the laminate is preferably from (Tg-30)°C to (Tg+60)°C, and still more preferably from (Tg-10)°C to (Tg+50)°C. The stretching ratio is usually 1.01 to 30, preferably 1.01 to 10, and still more preferably 1.01 to 5.

In the case of manufacturing the laminate using the above-described coextrusion method, it is unnecessary to cut chips from the stretched film and attach the cut chips differing from a conventional quarter-wave plate manufacturing method. Therefore, a long quarter-wave plate can be continuously produced by a roll to roll method.

There are no specific limitations to the layer configuration of the quarter-wave plate used in the present invention insofar as the quarter-wave plate includes at least one layer A and at least one layer B, and the layer A and the layer B have the same molecular chain orientation. It is preferable that the quarter-wave plate have a layer configuration consisting of the layer A, the layer B, and the layer A or consisting of the layer B, the layer A, and the layer B. The quarter-wave plate preferably further includes the layer C between the layer A and the layer B. It is still more preferable that the quarter-wave plate have a three-layer configuration consisting of the layer A, the layer C, and the layer B, or a five-layer configuration consisting of the layer A, the layer C, the layer B, the layer C, and the layer A or consisting of the layer B, the layer C, the layer A, the layer C, and the layer B, with the five-layer configuration consisting of the layer A, the layer C, the layer B, the layer C, and the layer A being particularly preferable.

The quarter-wave plate used in the present invention has a variation in thickness of 5% or less, preferably 4% or less, and still more preferably 3% or less. If the variation in thickness exceeds 5%, retardation uniformity is impaired, whereby an in-plane variation in intensity or color tone of transmitted light may occur. The thickness and the variation in thickness may be measured using a stylus-type measuring instrument, for example.

A quarter-wave plate having a variation in thickness of 5% or less is obtained by optimizing the resin temperature, die temperature, winding rate when forming the laminate by coextruding the layer A, the layer B, and the layer C, and the temperature and the stretching speed during stretching. It is preferable to use the alicyclic structure-containing polymer resin having a content of a resin component with a molecular weight of 2,000 or less of 5 wt% or less as the material for the layer A.

The volatile content in the resin which makes up the layer A of the quarter-wave plate used in the present invention is not particularly limited. The volatile content is preferably 1,000 ppm or less, and still more preferably 500 ppm or less. If the volatile content exceeds 1,000 ppm, the volatile components are released to the outside during use. This causes an internal stress to occur due to a dimensional change of the quarter-wave plate, whereby retardation uniformity may be impaired.

The volatile component is a comparatively low-boiling-point substance having a molecular weight of 200 or less included in the resin which makes up the layer A of the quarter-wave plate in only a small amount. For example, a residual monomer, a solvent, and the like can be given. The volatile content is the total amount of substances with a molecular weight of 200 or less included in the resin which makes up the layer A in only a small amount, and may be determined by analyzing the resin which makes up the layer A by gas chromatography.

As the method for obtaining a resin with a volatile content of 1,000 ppm or less, (i) a method of stretching a laminate in which the layer A is formed of a resin with a volatile content of 1,000 ppm or less, (ii) a method of using a laminate in which the layer A is formed of a resin with a volatile content exceeding 1,000 ppm, and reducing the volatile content by drying the laminate during or after stretching, and the like can be given. Of these, the method (i) is preferable in order to obtain a quarter-wave plate with a lower volatile content.

There are no specific limitations to the saturated water absorption of the quarter-wave plate of the present invention. However, the saturated water absorption of at least one of the layer A and the layer B which make up the quarter-wave plate is preferably 0.01% or less, and still more preferably 0.007% or less. If the saturated water absorption exceeds 0.01%, strain and stress occur inside the laminate (quarter-wave plate) formed of different materials due to a change in use environment. This causes an in-plane variation in retardation, whereby a variation in luminance of transmitted light may occur. A quarter-wave plate having a saturated water absorption within the above range does not cause a variation in luminance of transmitted light during use for a long period of time, and therefore excels in stability of optical properties.

### (2) Cholesteric liquid crystal layer

The cholesteric liquid crystal layer is generally formed of a regularly twisted liquid crystal molecule which draws a helix in the thickness direction. It is known that such an optical medium shows optical properties such as optical activity and selective reflection when the pitch (thickness necessary for the liquid crystal molecule to rotate at 360°) and the wavelength of incident light are almost equal (see "Basics of Liquid Crystal and Display Application, Corona Publishing Co., Ltd., ISBN 4-339-00620-3, for example). The cholesteric liquid crystal layer reflects a circularly polarized component of incident light which rotates in the same direction as the twisting direction, and the rotational direction of the reflected light remains the same. On the other hand, the cholesteric liquid crystal layer allows a circularly polarized component which rotates in the direction opposite to the twisting direction to pass therethrough.

The cholesteric liquid crystal layer used in the present invention must have a circularly polarized light separation function over the entire visible wavelength region. As examples of such a cholesteric liquid crystal layer, (α) a cholesteric liquid crystal layer formed by combining cholesteric liquid crystal layers which differ in center wavelength of selectively reflected light, (β) a cholesteric liquid crystal layer formed of one cholesteric liquid crystal layer in which the helical pitch is continuously changed in the thickness direction, and the like can be given.

In the case of using the cholesteric liquid crystal layer (α), it is preferable to combine cholesteric liquid crystal layers which reflect circularly polarized light in the same direction in order to prevent the polarization state from differing depending on the wavelength region by making the phase of circularly polarized light reflected by each layer the same and to increase the amount of available polarized light. In this case, it is still more preferable that the cholesteric liquid crystal layers be laminated in wavelength order based on the center wavelength of reflected light in order to reduce the wavelength shift at a wide viewing angle.

As the method for laminating the cholesteric liquid crystal layers in wavelength order based on the center wavelength of reflected light, a method of forming cholesteric liquid crystal layers of which the center wavelength of selectively reflected light is 470 nm, 550 nm, 640 nm, and 770 nm, respectively, and laminating three to seven layers of arbitrarily selected cholesteric liquid crystal layers in the order of the center wavelength of selectively reflected light can be given.

As the method for laminating a plurality of cholesteric liquid crystal layers which differ in center wavelength of selectively reflected light, a simple lamination method, bonding using an adhesive such as a tackiness agent, and the like can be given.

The cholesteric liquid crystal layer (β) may be formed as follows. A liquid crystal layer including a compound which is isomerized by application of ultraviolet rays at a specific wavelength to become a chiral agent, a liquid crystal, and a UV absorber is irradiated with ultraviolet rays at the specific wavelength so that the intensity of the irradiated light continuously attenuates from the surface (ultraviolet application side) in the depth direction. As a result, a liquid crystal layer in a state in which the amount of the chiral agent is continuously decreased in the depth direction from the surface, specifically, in a state in which the helical pitch of the liquid crystal is continuously changed in the direction of the thickness of the liquid crystal layer is obtained. The state in which the helical pitch is gradually changed is fixed by curing the entire liquid crystal layer by applying ultraviolet rays at a wavelength differing from the specific wavelength to the liquid crystal layer. The cholesteric liquid crystal layer thus obtained has a structure in which the pitch of the helical structure is continuously changed in the depth direction and has a circularly polarized light separation function over the entire visible wavelength region.

This type of cholesteric liquid crystal layer is disclosed in "SID '95, Asia Display", p. 735 (1995) and "Liquid Crystal", Vol. 2, Issue 2, pp. 32-39 (1998), for example.

There are no specific limitations to the material (liquid crystal polymer) for the cholesteric liquid crystal used in the present invention. Various materials such as a liquid crystal polymer in which a conjugated linear atomic group (mesogen) which provides liquid crystal orientation properties is introduced into the polymer main chain or a liquid crystal polymer in which the mesogen is introduced into the polymer side chain may be used.

The liquid crystal polymer in which the mesogen is introduced into the polymer main chain has a structure in which a mesogenic group such as a para-substituted cyclic compound is bonded optionally through a spacer which provides flexibility. For example, a polyester polymer, polyamide polymer, a polycarbonate polymer, and a polyesterimide polymer can be given.

As examples of the liquid crystal polymer in which the mesogen is introduced into the polymer side chain, a liquid crystal polymer including polyacrylate, polymethacrylate, polysiloxane, or polymalonate as the main chain skeleton and a low-molecular-weight liquid crystal compound (mesogen) such as a para-substituted cyclic compound as the side chain optionally through a spacer such as a conjugated atomic group, a nematic liquid crystal polymer containing a low-molecular-weight chiral agent, a liquid crystal polymer into which a chiral component is introduced, a nematic and cholesteric mixed liquid crystal polymer, and the like can be given.

A cholesteric liquid crystal polymer may be obtained by using a method of introducing an arbitrary chiral component such as a compound including an asymmetrical carbon atom or a low-molecular-weight chiral agent into a liquid crystal polymer including a para-substituted cyclic compound which provides nematic orientation properties such as a para-substituted aromatic unit or a para-substituted cyclohexyl ring unit such as an azomethine unit, azo unit, azoxy unit, ester unit, biphenyl unit, phenylcyclohexane unit, or bicyclohexane unit (see JP-A-55-21479 and USP 5,332,522, for example). As examples of the terminal substituent at the para position of the para-substituted cyclic compound, a cyano group, an alkyl group, an alkoxy group, and the like can be given.

As examples of the spacer, a polymethylene chain, a polyoxymethylene chain, and the like can be given. The number of carbon atoms included in the structural unit which forms the spacer is arbitrarily determined depending on the chemical structure of the mesogen and the like. Generally, the number of carbon atoms is 0 to 20, and preferably 2 to 12 in the case of a polymethylene chain, and is 0 to 10, and preferably 1 to 3 in the case of a polyoxymethylene chain.

As the method for manufacturing a polymer in which the mesogen is introduced into the polymer main chain, a method of polymerizing component monomers by radical polymerization, cationic polymerization, or anionic polymerization, and the like can be given. As the method for manufacturing a polymer in which the mesogen is introduced into the polymer side chain, a method of polymerizing a vinyl monomer such as an acrylate or methacrylate with a monomer into which a mesogenic group is introduced optionally through a spacer by radical polymerization, a method of subjecting a vinyl-substituted mesogen monomer to an addition reaction in the presence of a platinum-based catalyst through an Si-H bond of polyoxymethylsilylene, a method of introducing a mesogenic group by an esterification reaction using a phase transfer catalyst through a functional group provided to the main chain polymer, a method of polycondensing a monomer in which a mesogenic group is introduced into malonic acid optionally through a spacer group with a diol, and the like can be given.

The thickness of the cholesteric liquid crystal layer (entire thickness when the cholesteric liquid crystal layer is made up of a plurality of layers) is usually 1 to 50 µm, preferably 2 to 30 µm, and still more preferably 2 to 10 µm from the viewpoint of preventing orientation disorder and a decrease in transmittance and ensuring a wide selective reflection wavelength range (reflection wavelength region). In the case where the cholesteric liquid crystal layer includes a base substrate, the entire thickness including the substrate is usually 20 to 200 µm, preferably 25 to 150 µm, and still more preferably 30 to 100 µm.

### (3) Lamination method for cholesteric liquid crystal layer and quarter-wave plate

As the method for laminating the cholesteric liquid crystal layer and the quarter-wave plate, (I) a method of providing an alignment film on the quarter-wave plate and directly forming the cholesteric liquid crystal layer on the alignment film, (II) a method of forming the liquid crystal layer on a base film (separation plate) and transferring the liquid crystal layer onto the quarter-wave plate, (III) a method of forming the liquid crystal layer on a base film (separation plate) and attaching the resulting laminate to the quarter-wave plate, and the like can be given.

In the method (I), the alignment film may be formed by forming a film of polyimide, polyvinyl alcohol, polyester, polyallylate, polyamideimide, polyetherimide, or the like, and subjecting the resulting film to rubbing using rayon cloth or the like. The alignment film may be formed by an orthorhombic SiO deposition layer or by stretching.

As examples of the base film used in the methods (II) and (III), a single-layer or multilayer film made of a synthetic resin such as triacetyl cellulose, polyvinyl alcohol, polyimide, polyallylate, polyester, polycarbonate, polysulfone, polyethersulfone, amorphous polyolefin, modified acrylic polymer, or epoxy resin, a glass plate, and the like can be given. A synthetic resin film is preferable from the viewpoint of a reduction of film thickness. A film having a small birefringence retardation is preferable from the viewpoint of improving light utilization efficiency by preventing a change in the polarization state.

As the method for forming the liquid crystal layer on the base film, a method of applying a liquid crystal polymer solvent solution to the base film using a conventional coating method such as a spin coating method, a roll coating method, a flow coating method, a printing method, a dip coating method, a casting method, a bar coating method, or a gravure printing method to form a film and drying the resulting film, and the like can be given. As the solvent for the liquid crystal polymer, methylene chloride, cyclohexanone, trichloroethylene, tetrachloroethane, N-methylpyrrolidone, tetrahydrofuran, or the like may be used.

As the method for forming the liquid crystal layer, a method of applying a melt of the liquid crystal polymer, preferably a melt in an isotropic phase to the base film using a method based on the above-described application method to form a film, reducing the thickness of the film while maintaining the melting temperature as required, and solidifying the resulting film may also be used.

The heating temperature for forming the liquid crystal layer is in the range from the glass transition temperature of the liquid crystal polymer to the isotropic phase transition temperature, specifically, the temperature range in which the liquid crystal polymer is in a liquid crystal phase. The orientation state can be fixed by cooling the liquid crystal polymer to a temperature lower than the glass transition temperature.

In the method (III), as the method for forming the liquid crystal layer on the base film and attaching the resulting laminate to the quarter-wave plate, a method of laminating the laminate and the quarter-wave plate through an adhesive layer made of a transparent adhesive or the like can be given.

As examples of the adhesive, adhesives using a base polymer such as an acrylic base polymer, a methacrylic base polymer, a butyl rubber base polymer, or a silicone base polymer can be given. Of these, the acrylic base polymer and the methacrylic base polymer are preferable.

As examples of the acrylic base polymer, a polymer obtained by using an acrylate such as methyl acrylate, ethyl acrylate, butyl acrylate, 2-ethylhexyl acrylate, or isooctyl acrylate as the monomer can be given. As examples of the methacrylic base polymer, a polymer obtained by using a methacrylate such as methyl methacrylate, ethyl methacrylate, butyl methacrylate, 2-ethylhexyl methacrylate, or isooctyl methacrylate as the monomer can be given. As the acrylic base polymer or the methacrylic base polymer, a copolymer of the above-mentioned acrylate or methacrylate and another polar monomer may also be used. As examples of the polar monomer, acrylic acid, 2-hydroxyethyl acrylate, 2-hydroxypropyl acrylate, acrylamide, N,N-dimethylaminoethyl acrylate, glycidyl acrylate, methacrylic acid, 2-hydroxyethyl methacrylate, 2-hydroxypropyl methacrylate, methacrylamide, N,N-dimethylaminoethyl methacrylate, glycidyl methacrylate, and the like can be given.

There are no specific limitations to the thickness of the adhesive layer used when laminating the cholesteric liquid crystal layer and the quarter-wave plate. The thickness of the adhesive layer is usually about 1 to 50 µm.

FIGS. 1(a) to 1(c) are layer-configuration cross-sectional views of the optical laminate of the present invention obtained as described above. FIG. 1(a) shows an optical laminate obtained by laminating a cholesteric liquid crystal layer 11, in which three cholesteric liquid crystal layers (11a, 11b, 11c) which differ in selective reflection center wavelength for incident light are laminated in that order, and a laminate 61, which includes three layers of three types consisting of the layer A, the layer C, and the layer B, through an adhesive layer 21.

FIG. 1(b) shows an optical laminate obtained by laminating a cholesteric liquid crystal layer 12, in which three cholesteric liquid crystal layers (12a, 12b, 12c) which differ in selective reflection center wavelength for incident light are laminated in that order, and a laminate 62 (quarter-wave plate), which includes five layers of three types consisting of the layer A, the layer C, the layer B, the layer C, and the layer A, through an adhesive layer 22.

FIG. 1(c) shows an optical laminate obtained by laminating a cholesteric liquid crystal layer 13 having a structure in which the helical pitch is continuously changed in the thickness direction, and a laminate 63 (quarter-wave plate), which includes five layers of three types consisting of the layer A, the layer C, the layer B, the layer C, and the layer A, through an adhesive layer 23.

As described above, an optical laminate which stably exhibits a luminance improving effect for a long period of time can be obtained by laminating a layer formed of an ethylene-(meth)acrylate copolymer having a specific melt flow rate (layer C) between the layer formed of an alicyclic structure-containing polymer resin (layer A) and a layer formed of a specific thermoplastic resin (layer B).

Reflected circularly polarized light reflected by the cholesteric liquid crystal layer is depolarized and reutilized as emitted light by combining the optical laminate of the present invention with an arbitrary surface light source such as a side-light type light guide plate, whereby reflection loss can be eliminated. The absorption loss caused by the polarizer is prevented by converting the emitted light into light containing a large amount of polarizer-transmissible linearly polarized light component by controlling the phase through the optical laminate laminated on the cholesteric liquid crystal layer, whereby the luminance can be improved.

### 2) Polarized light source device

The polarized light source device of the present invention includes the optical laminate of the present invention. It is preferable that the polarized light source device of the present invention include a light reflecting layer, a light source, and the optical laminate of the present invention, and that the light reflecting layer, the light source, and the optical laminate be disposed so that light emitted from the light source is incident on the optical laminate from the side of the cholesteric liquid crystal layer, and reflected circularly polarized light reflected by the optical laminate is reflected by the light reflecting layer and is incident on the optical laminate.

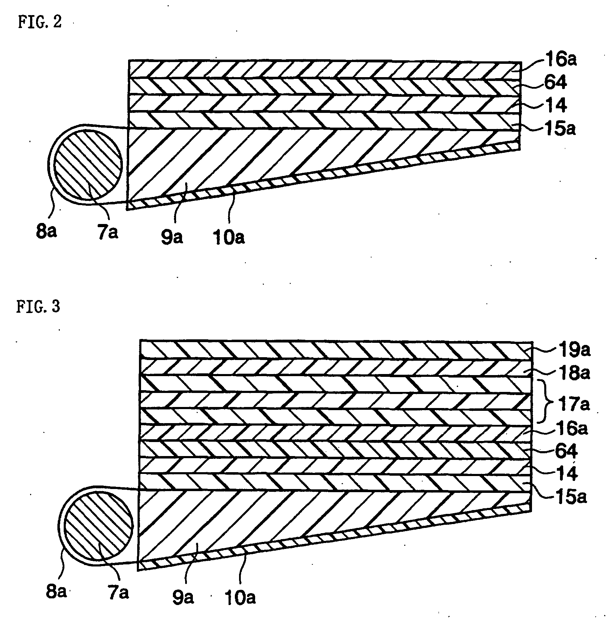

FIG. 2 shows an example of a layer configuration of the polarized light source device of the present invention. In FIG. 2, 7a indicates a light source, 8a indicates a light source holder, 9a indicates a light guide plate, 10a indicates a reflecting layer, 14 indicates a cholesteric liquid crystal layer, 15a indicates a diffuser, 64 indicates a quarter-wave plate, and 16a indicates a polarizer. Light emitted from the light source 7a disposed on the side surface is incident on the light guide plate 9a and is emitted upward (toward the cholesteric liquid crystal layer 14). When the light is incident on the cholesteric liquid crystal layer 14, the right or left circularly polarized light is transmitted through the cholesteric liquid crystal layer 14, and the other circularly polarized light is reflected and incident on the light guide plate 9a. The light incident on the light guide plate is reflected by the reflecting layer 10a on the lower side and is again incident on the cholesteric liquid crystal layer 14, whereby the incident light is separated into transmitted light and reflected light. This enables the light emitted from the light source 7a to be effectively utilized, whereby an excellent luminance improving effect can be obtained.

The light source 7a is not particularly limited. A conventional light source may be used. As the light guide plate 9a, a light guide plate having a shape in which the thickness of the end section opposite to the incident surface is smaller than the thickness of the incident surface (wedge shape) is preferable. In addition, a light guide plate having a structure with a minute prismatic unevenness is preferable, since such a light guide plate enables effective utilization of emitted light due to excellent emission efficiency from the emission surface and excellent perpendicularity to the emission surface. The light guide plate 9a may be formed of a transparent material such as a norbomene polymer, polymethyl methacrylate, polycarbonate, or polystyrene. The reflecting layer 10a may be arbitrarily formed by a plated layer, a metal deposition layer, metal foil, a metal deposition sheet, a plated sheet, or the like. The reflecting layer may be integrated with the surface of the light guide plate, or may be formed as a reflective sheet by laminating the reflecting layer on the light guide plate.

Since the polarized light source device of the present invention includes the optical laminate of the present invention, the polarized light source device exhibits an excellent luminance improving effect and stably maintains the luminance improving effect for a long period of time.

### 3) Liquid crystal display device

The liquid crystal display device of the present invention includes the polarized light source device of the present invention, and further includes a liquid crystal cell on the polarized light source device. A liquid crystal display device is generally manufactured by combining a liquid crystal cell which functions as a liquid crystal shutter with components such as a driver device, a polarizer, a backlight, and optionally a compensation retardation plate. The liquid crystal display device of the present invention may be manufactured using a method based on a conventional method except for using the optical laminate of the present invention.

FIG. 3 shows an example of a layer configuration of the liquid crystal display device of the present invention. The liquid crystal display device shown in FIG. 3 uses the polarized light source device of the present invention as a backlight system. In FIG. 3, 17a indicates a liquid crystal cell, 16a indicates a lower polarizer, 18a indicates an upper polarizer, and 15a and 19a indicate diffusers. The lower polarizer 16a and the diffusers (15a, 19a) may be omitted.

The liquid crystal mode to be used is not particularly limited. As examples of the liquid crystal mode, a twisted nematic (TN) type, super twisted nematic (STN) type, hybrid aligned nematic (HAN) type, and the like can be given. The polarizers (16 a, 18a) are not particularly limited. A conventional polarizer may be used.

Since the liquid crystal display device of the present invention includes the optical laminate of the present invention, the liquid crystal display device exhibits an excellent luminance improving effect and stably maintains the luminance improving effect for a long period of time.

### EXAMPLES

The present invention is described below in more detail by examples and comparative examples. However, the present invention is not limited to the following examples.

In the examples and comparative examples, the melt flow rate (MFR) of a polymer and a resin used as the materials for each layer is a value measured at a temperature of 190°C and a load of 21.18 N. The melt viscosity is a value measured at a temperature of 250°C and a shear rate of 180 sec⁻¹. The content of a resin component with a molecular weight of 2,000 or less (oligomer component) was measured and quantified using GPC (solvent: cyclohexane).

In the examples and comparative examples, evaluation was carried out according to the following method.

### (1) Thickness of quarter-wave plate and variation in thickness

The thicknesses of the center and opposite ends of the quarter-wave plate were measured at 10 points at an interval of 20 mm in the longitudinal direction of the quarter-wave plate using a stylus-type measuring instrument, and the average value at the 30 points was calculated. The maximum value, the minimum value, and the average value of the values at the 30 points were determined, and "[(maximum value - minimum value) / 2] / average value × 100" was calculated. The resulting value was taken as the variation (%).

### Preparation Example 1: Preparation of norbornene polymer 1

A reaction vessel was charged with 500 parts of dehydrated cyclohexane, 0.82 part of 1-hexene, 0.15 part of dibutyl ether, and 0.30 part of triisobutylaluminum at room temperature in a nitrogen atmosphere. The components were then mixed. A morbornene monomer mixture consisting of 80 parts of tricyclo[4.3.0.1^{2,5}]deca-3,7-diene (dicyclopentadiene, hereinafter abbreviated as "DCP"), 70 parts of 7,8-benzotricyclo[4.4.0.1^{2,5}.1^{7,10}]deca-3-ene (methanotetrahydrofluorene, hereinafter abbreviated as "MTF"), and tetracyclo[4.4.0.1^{2,5}.1^{7,10}]dodeca-3-ene (tetracyclododecene, hereinafter abbreviated as "TCD"), and 40 parts of tungsten hexachloride (0.7% toluene solution) were continuously added to the mixture at 45°C over two hours to polymerize the monomers. The polymerization catalyst was deactivated by adding 1.06 parts of butyl glycidyl ether and 0.52 part of isopropyl alcohol to the polymer solution to terminate the polymerization.

270 parts of cyclohexane was added to 100 parts of the reaction solution containing the resulting ring-opening polymer. After the addition of 5 parts of a nickel-alumina catalyst (manufactured by Nikki Chemical Co., Ltd.) as a hydrogenation catalyst, the mixture was pressurized at 5 MPa using hydrogen. The mixture was then heated to 200°C with stirring and allowed to react for four hours to obtain a reaction solution containing 20% of a hydrogenated polymer of a DCP/MTF/TCD ring-opening copolymer (norbornene polymer 1).

The copolymerization ratio of the norbomene monomers in the resulting norbornene polymer 1 was calculated from the composition of the residual norbornenes in the reaction solution after polymerization (based on a gas chromatography method). As a result, the copolymerization ratio (DCP/MTF/TCD=40/25/35) was almost equal to the raw material composition. The weight average molecular weight (Mw) of the norbomene polymer 1 was 35,000. The molecular weight distribution was 2.1, and the content of a resin component with a molecular weight of 2,000 or less was 0.9 wt%. The hydrogenation rate was 99.9%, Tg was 134°C, and the melt viscosity was 520 Pa·s.

After removing the hydrogenation catalyst from the reaction solution by filtration, an antioxidant ("Irganox 1010" manufactured by Ciba Specialty Chemicals Co., Ltd.) was added to and dissolved in the resulting solution (antioxidant was added in an amount of 0.1 part per 100 parts of the polymer). Then, cyclohexane as the solvent and other volatile components were removed from the solution using a cylindrical concentration dryer (manufactured by Hitachi, Ltd.) at a temperature of 270°C and a pressure of 1 kPa or less to obtain the norbomene polymer 1.

### Preparation Example 2: Preparation of norbornene polymer 2

A norbornene polymer 2 was obtained in the same manner as in Preparation Example 1 except for using 0.80 part of 1-hexene and 0.14 part of dibutyl ether and adjusting the polymerization temperature to 55°C. The weight average molecular weight (Mw) of the norbornene polymer 2 was 36,000. The molecular weight distribution was 2.2, and the content of a resin component with a molecular weight of 2,000 or less was 5.5 wt%. The hydrogenation rate was 99.9%, Tg was 133°C, and the melt viscosity was 510 Pa·s.

### Preparation Example 3: Preparation of norbornene polymer 3

The reaction solutions containing 20% of the hydrogenated polymer of the DCP/MTF/TCD ring-opening copolymer (hydrogenation catalyst was removed by filtration) obtained as the intermediates in Preparation Example 1 and Preparation Example 2, 200 parts each, were mixed to obtain 400 parts of a mixed reaction solution. A norbomene polymer 3 was then obtained in the same manner as in Preparation Example 1.

The weight average molecular weight (Mw) of the norbornene polymer 3 was 35,000. The molecular weight distribution was 2.2, and the content of a resin component with a molecular weight of 2,000 or less was 3.2 wt%. The hydrogenation rate was 99.9%, Tg was 133°C, and the melt viscosity was 510 Pa·s.

### Preparation Example 4: Preparation of quarter-wave plate

A laminate of five layers of three different types consisting of the layer A (50 µm), the layer C (10 µm), the layer B (50 µm), the layer C (10 µm), and the layer A (50 µm), including the layer A of the norbornene polymer 1 obtained in Preparation Example 1, the layer B of polystyrene ("Daylark D332" manufactured by NOVA Chemicals Corporation, melt viscosity: 440 Pa·s, oligomer content: 3 wt%), and the layer C of an ethylene-ethyl acrylate copolymer ("EVAFLEX-EEAA-170" manufactured by Du Pont-Mitsui Polychemicals Co., Ltd., MFR: 0.5 g/10 min, melt viscosity: 550Pa·s), was produced by extrusion.

The resulting laminate was uniaxially stretched at 120°C and 65% to obtain a stretched film (quarter-wave plate) having a five-layer configuration. Wrinkles, unevenness, and whitening which can be observed with the naked eye did not occur on the surface of the stretched film. Table 1 shows the entire thickness of the stretched film and the variation in thickness. The wavelength dependence of retardation (Re) of the resulting stretched film was measured (10 point average) using "KOBRA 21DH" manufactured by Oji Scientific Instruments. The measurement results are shown in Table 1.

### Preparation Example 5: Preparation of quarter-wave plate

A laminate of five layers of three different types consisting of the layer A (50 µm), the layer C (10 µm), the layer B (50 µm), the layer C (10 µm), and the layer A (50 µm) was produced by extrusion in the same manner as in Preparation Example 4 except for using the norbomene polymer 2 instead of the norbomene polymer 1.

The resulting laminate was uniaxially stretched at 120°C and 65% to obtain a stretched film (quarter-wave plate) having a five-layer configuration. Wrinkles, unevenness, and whitening which can be observed with the naked eye did not occur on the surface of the stretched film. Table 1 shows the entire thickness of the stretched film and the variation in thickness. The wavelength dependence of retardation (Re) of the resulting stretched film was measured (10 point average) using "KOBRA 21DH" manufactured by Oji Scientific Instruments. The measurement results are shown in Table 1.

### Preparation Example 6: Preparation of quarter-wave plate

A laminate of five layers of three different types consisting of the layer A (50 µm), the layer C (10 µm), the layer B (50 µm), the layer C (10 µm), and the layer A (50 µm) was produced by extrusion in the same manner as in Preparation Example 4 except for using the norbornene polymer 3 instead of the norbornene polymer 1.

The resulting optical laminate was uniaxially stretched at 120°C and 65% to obtain a stretched film (quarter-wave plate) having a' five-layer configuration. Wrinkles, unevenness, and whitening which can be observed with the naked eye did not occur on the surface of the stretched film. Table 1 shows the entire thickness of the stretched film and the variation in thickness. The wavelength dependence of retardation (Re) of the resulting stretched film was measured (10 point average) using "KOBRA 21DH" manufactured by Oji Scientific Instruments. The measurement results are shown in Table 1.

**TABLE 1**

| Preparation Example | Layer A | Entire thickness (µm) | Variation in thickness (%) | Re/λ | | |
|---|---|---|---|---|---|---|
| | | | | λ=450 nm | λ=550 nm | λ=650 nm |
| 4 | Norbornene polymer 1 | 110 | 2.2 | 0.250 | 0.255 | 0.240 |
| 5 | Norbornene polymer 2 | 108 | 5.8 | 0.245 | 0.254 | 0.235 |
| 6 | Norbornene polymer 3 | 110 | 4.0 | 0.248 | 0.252 | 0.237 |

As shown in Table 1, the quarter-wave plates obtained in Preparation Examples 4 to 6 had characteristics of a broadband quarter-wave plate in which Re/λ was in the range from 0.235 to 0.255 at a wavelength (λ) of 450 nm, 550 nm, and 650 nm.

### Example 1: Preparation of optical laminate

Films of three types of acrylic-main-chain-containing side chain type cholesteric liquid crystal polymers having different glass transition temperatures were formed (thickness: 2 µm) on a polyimide rubbed surface of an acetyl cellulose film with a thickness of 30 mm using a spin coating method. The polymers were heated to a predetermined temperature and rapidly cooled to obtain a cholesteric liquid crystal layer laminate in which three cholesteric liquid crystal layers having a selective reflection center wavelength of 470 nm, 550 nm, and 640 nm were laminated in that order.

The quarter-wave plate obtained in Preparation Example 4 was attached to the cholesteric liquid crystal layer having a selective reflection center wavelength of 640 nm of the above cholesteric liquid crystal layer laminate using an acrylic adhesive to obtain an optical laminate of Example 1.

### Example 2: Preparation of optical laminate

An optical laminate of Example 2 was obtained in the same manner as in Example 1 except for using the quarter-wave plate obtained in Preparation Example 6 instead of the quarter-wave plate obtained in Preparation Example 4.

### Example 3: Preparation of liquid crystal display backlight device

A side-light type surface light source device was provided in which a cold cathode tube with a diameter of 3 mm was disposed on the side surface of a light guide plate in which a minute prism structure was formed, the cathode tube being enclosed by a light source holder made of a silver-deposited polyester film, and a reflective sheet made of a silver-deposited polyester film being disposed under the light guide plate.

A backlight device was provided in which a diffusion sheet containing silica particles and having a minute uneven surface structure was disposed on the upper surface of the light guide plate of the surface light source device, and the optical laminate obtained in Example 1 was disposed on the diffusion sheet. This backlight device had uniform frontal luminance, and uniformly emitted light from the entire surface. The emitted light was uniform white light without coloring.

The average degree of polarization of the backlight device for frontal emitted light was measured at a wavelength of 400 to 700 nm and was found to be 94%. The utilization rate of the light source was 1.6 times of that in the case of using a polarizer instead of the optical laminate of the present invention.

### Example 4: Preparation of liquid crystal display backlight device

A liquid crystal display backlight device was obtained in the same manner as in Example 3 except for using the optical laminate obtained in Example 2 instead of the optical laminate obtained in Example 1.

This backlight device had uniform frontal luminance and uniformly emitted light from the entire surface. The emitted light was uniform white light without coloring.

The average degree of polarization of the backlight device for frontal emitted light was measured at a wavelength of 400 to 700 nm and was found to be 91%. The utilization rate of the light source was 1.5 times of that in the case of using a polarizer instead of the optical laminate of the present invention.

### Comparative Example 1

An optical laminate was obtained in the same manner as in Example 1 except for using the quarter-wave plate obtained in Preparation Example 5. A backlight device was obtained in the same manner as in Example 3.

This backlight device had nonuniform frontal luminance, and uniform emitted light was not obtained. A small degree of coloring was observed in a part of the emitted light.

The average degree of polarization of the backlight device for frontal emitted light was measured at a wavelength of 400 to 700 nm and was found to be 85%. The utilization rate of the light source was 1.4 times of that in the case of using a polarizer instead of the optical laminate of the comparative example.

The polarized light sources using the optical laminates of Examples 1 and 2 using the quarter-wave plate of which the variation in thickness was 5% or less had uniform frontal luminance and uniform emitted light color tone and exhibited an excellent light utilization rate. On the other hand, the polarized light source using the optical laminate of Comparative Example 1 using the quarter-wave plate of which the variation in thickness exceeded 5% had partial nonuniformity of frontal luminance and color tone of emitted light and exhibited a light utilization rate lower than that of the examples.

### INDUSTRIAL APPLICABILITY

According to the present invention, an optical laminate in which a cholesteric liquid crystal layer and a specific quarter-wave plate are laminated and which exhibits an excellent luminance improving effect and stably maintains the luminance improving effect for a long period of time, and a polarized light source device and a liquid crystal display device including the optical laminate are provided.

## Claims

1. An optical laminate, comprising a cholesteric liquid crystal layer and a quarter-wave plate laminated on the cholesteric liquid crystal layer, wherein the quarter-wave plate includes at least one layer of a material having a positive intrinsic birefringence value (layer A) and at least one layer of a material having a negative intrinsic birefringence value (layer B), the layer A and the layer B having the same molecular chain orientation, and the quarter-wave plate having a variation in thickness of 5% or less.

2. The optical laminate according to claim 1, wherein the quarter-wave plate is a quarter-wave plate obtained by stretching a laminate obtained by coextruding the material having a positive intrinsic birefringence value and the material having a negative intrinsic birefringence value.

3. The optical laminate according to claim 1 or 2, wherein the material having a positive intrinsic birefringence value is an alicyclic structure-containing polymer resin having a content of a resin component with a molecular weight of 2,000 or less of 5 wt% or less.

4. The optical laminate according to any of claims 1 to 3, wherein the material having a negative intrinsic birefringence value is a vinyl aromatic polymer.

5. The optical laminate according to any of claims 1 to 4, wherein the quarter-wave plate has a configuration consisting of the layer A, the layer B, and the layer A, or consisting of the layer B, the layer A, and the layer B.

6. A polarized light source device, comprising the optical laminate according to any of claims 1 to 5.

7. The polarized light source device according to claim 6, comprising a light reflecting layer, a light source, and the optical laminate according to any of claims 1 to 5, wherein the light reflecting layer, the light source, and the optical laminate are disposed so that light emitted from the light source is incident on the optical laminate from a side of the cholesteric liquid crystal layer, and reflected circularly polarized light reflected by the optical laminate is reflected by the light reflecting layer and is incident on the optical laminate.

8. A liquid crystal display device, comprising the polarized light source device according to claim 6 or 7.
